# EUROPÄISCHE PATENTSCHRIFT

(11) **EP 1 541 961 B1**
(45) Veröffentlichungstag und Bekanntmachung des Hinweises auf die Patenterteilung: **09.04.2014**
(21) Anmeldenummer: 03028778.3
(22) Anmeldetag: 13.12.2003
(51) Int. Cl.: G01B 11/30, G01N 21/88, G01J 3/46

(54) **Vorrichtung und Verfahren zur Prüfung von Oberflächen, insbesondere von Stahloberflächen, z.B. hinsichtlich Struktur, Farbintensität und/oder Farbverteilung**
Apparatus and method for the inspection of surfaces, in particular steel surfaces, eg. with respect to structure, color intensity, and/or color distribution
Dispositif et procédé pour l'inspection de surfaces, en particulier de surfaces d'acier, p. ex. par rapport à la structure, l'intensité de couleur et/ou la distribution de couleur

(43) Veröffentlichungstag der Anmeldung: 15.06.2005
(60) Teilanmeldung: 04025262.9
(73) Patentinhaber: Muehlhan AG, 21107 Hamburg (DE)
(72) Erfinder: Greverath, Wulf-Dieter, 22605 Hamburg (DE); Momber, Andreas, 21073 Hamburg (DE); Opel, Helmut, 22299 Hamburg (DE)
(74) Vertreter: von Eichel-Streiber, Caspar

(56) Entgegenhaltungen:
- EP-A- 0 774 645
- DE-A- 3 639 711
- FR-A1- 2 829 835
- US-A- 5 283 642
- PATENT ABSTRACTS OF JAPAN Bd. 018, Nr. 292 (M-1615), 3. Juni 1994 (1994-06-03) -& JP 06 055916 A (OHTSU TIRE & RUBBER CO LTD:THE), 1. März 1994 (1994-03-01)
- PATENT ABSTRACTS OF JAPAN Bd. 2000, Nr. 13, 5. Februar 2001 (2001-02-05) & JP 2000 298102 A (NKK CORP), 24. Oktober 2000 (2000-10-24)

## Beschreibung

Die vorliegende Erfindung betrifft eine optische Oberflächenprüfvorrichtung, insbesondere für (un)beschichtete Stahloberflächen.

Eine derartige Vorrichtung ist aus PAT.ABSTR. OF JAP. Bd. 018, Nr. 292 (M-1615), 03.06.94 und JP06055916A bekannt geworden. Nach der Lehre dieser vorbekannten Druckschrift werden jedoch weder Oberflächen- noch Farbkennwerte gemessen, sondern vielmehr ausschließlich geometrische Kennwerte. Es werden auch keine optischen Bildinformationen wie Helligkeit, Farben oder Reflektion vom Rechner verarbeitet, sondern nur geometrische Informationen wie z.B. Abstände oder Längen.

In der EP 0 774 645 wird eine Einrichtung zur Erfassung geometrischer Abmessungen von Körpern beschrieben. Zu dem Zweck wird eine Skalierungsplatte auf das zu messende Objekt platziert, wobei die Skalierungsplatte ausdrücklich mit einer Markierungsmatrix versehen sein muss. Es ist keine Vorrichtung vorgesehen, die Objekt, Beleuchtung und Kamera (bzw. Sensor) fest miteinander verbindet, weshalb keine Standardbedingungen realisiert werden können.

Daneben offenbart FR 2 829 835 A1 eine optische Oberflächenprüfvorrichtung mit einem auf eine zu vermessende Oberfläche (z.B. eine Holzoberfläche) aufsetzbarem Rahmen. Der Rahmen umfasst dabei horizontale und vertikale Verschiebeeinrichtungen für die Kamera sowie Skalierungen.

In der Praxis wurden bisher Oberflächenzustände wie folgt beurteilt:

Die Beurteilung von Farbintensität und -verteilung erfolgt visuell durch den Vergleich der zu beurteilenden Oberflächen mit in gedruckten Katalogen enthaltenen Standardphotographien. Die photographischen Vergleichsbilder in den verschiedenen Katalogen sind nicht unter standardisierten Bedingungen aufgenommen worden und weichen daher in Format, Größe, Skalierung und Färbung beträchtlich voneinander ab. Diese Art der Beurteilung ist problematisch aus verschiedenen Gründen. Zunächst handelt es sich um das Ergebnis einer subjektiven, personengebundenen Beurteilung. Weiterhin verfälschen natürliche Reflexionen an den zu beurteilenden Oberflächen das Ergebnis. Die aktuelle Beleuchtungssituation (z.B. Sonneneinstrahlung, künstliches Licht, Größe und Farbe der Gesamtfläche) beeinflusst das Ergebnis ebenfalls entscheidend.

Die Beurteilung der Oberflächenstruktur (hier insbesondere die Rauheit) erfolgt bisher mit Hilfe von visuellen bzw. taktilen Vergleichsmustern, die jedoch nur die Bestimmung von Bereichen des entsprechenden Strukturkennwertes (z.B. Rauheitsbereich von 40 µm bis 70 µm) ermöglichen, nicht jedoch die Bestimmung von Einzelwerten. Zudem ist auch dieses Vorgehen geprägt von subjektiven Einflüssen. Zur Beurteilung der Oberflächenstruktur stehen darüber hinaus mechanische und optische Abtastgeräte zur Verfügung. Diese Geräte erfordern hohe Investitionen und sehr viel Wartung. Sie sind im strengen Sinne für den Maschinenbau im stationären Bereich entwickelt worden und haben sich im mobilen Einsatz nicht durchgesetzt.

Es ist keine mobile, zur gleichzeitigen und objektiven Prüfung von Struktur und Farbintensität bzw. -verteilung geeignete Vorrichtung bekannt.

Der Erfindung liegt deshalb die Aufgabe zugrunde, eine kompakte und tragbare Vorrichtung zu schaffen, die eine flexible reproduzierbare Einstellung der Aufnahmebedingungen ermöglicht.

Diese Aufgabe wird durch die im Anspruch 1 gekennzeichnete Oberflächenprüfvorrichtung gelöst.

Die Oberflächenprüfeinrichtung ermöglicht die standardisierte und damit objektive Erfassung, Beurteilung und Einordnung von Oberflächen bzw. derer Zustände. Mit Hilfe der Einrichtung werden die Oberflächen photographisch erfasst, digitalisiert und übertragen. Die Einrichtung ist kompakt und baustellentauglich. Sie besteht aus mehreren Modulen, insbesondere einem Aufnahmemodul, einem Abstandsreglungsmodul, einem Skalierungsmodul, einem Belichtungsmodul, einem Übertragungsmodul und einem Auswertungsmodul. Standardisierungsmerkmale sind Belichtungszeit, Blendenweite, Abstand zum Objekt, Beleuchtungswinkel, Beleuchtungsintensität und - verteilung.

Die Vorrichtung ermöglicht also die standardisierte und damit objektive Erfassung, Beurteilung und Einordnung von Oberflächen bzw. derer Zustände und lässt sich im Baustellenbetrieb anwenden. Die Oberfläche bzw. deren Zustände werden zunächst mit Hilfe eines Rahmens und den darin integrierten Modulen optisch erfasst. Das erfasste Oberflächenelement wird dabei sofort digitalisiert. Das digitale Bild wird in eine Auswertungseinrichtung übertragen und dort mit in dieser Einrichtung bereits vorhandenen Standardmustern verglichen. Der Vergleich erfolgt auf Basis bestimmter Oberflächenzustände, insbesondere Farbintensität und -verteilung sowie Oberflächenstruktur. Diese Oberflächenzustände werden in der Auswertungseinrichtung zu Vergleichszwecken sowohl grafisch (in Diagrammform) als auch diskret (in Tabellenform) dargestellt. Dabei wird das zu beurteilende digitale Bild automatisch dem Standardmuster zugeordnet, dessen Oberflächenzustände (bzw. die entsprechende Darstellungsformen) maximale Ähnlichkeiten mit den Oberflächenzuständen des digitalen Bildes aufweisen. Verfahrensgemäße Merkmale sind nicht Gegenstand des vorliegenden Patentes, sondern der Patentanmeldung EP 04 025 262.1

Weitere Vorteile und Merkmale gehen aus den abhängigen Ansprüchen hervor, die auch gemeinsam mit dem Anspruch 1 von erfinderischer Bedeutung sein können. Zum besseren Verständnis der Erfindung wird dieselbe nunmehr anhand der Zeichnung näher erläutert.

Es zeigt:
- Bild 1: eine schematische Perspektivansicht der erfindungsgemäßen optischen Oberflächenprüfvorrichtung im Einsatz;
- Bild 2: eine graphische perspektivische Darstellung in zwei Schritten von Digitalkamera (Datenerfassung) und Datenverarbeitungsanlage;
- Bild 3: eine fotographische Abbildung einer zu untersuchenden Stahloberfläche mit graphischer Darstellung in Form von Histogrammen; und
- Bild 4: eine fotografische Abbildung der zu untersuchenden Stahloberfläche mit einer Meßlinie, wobei im unteren Bereich das Profil entlang dieser Meßlinie dargestellt wird.

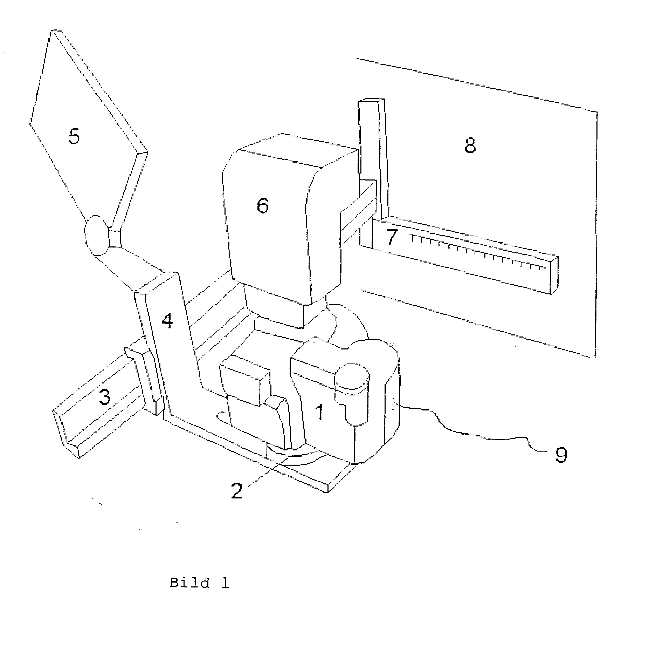

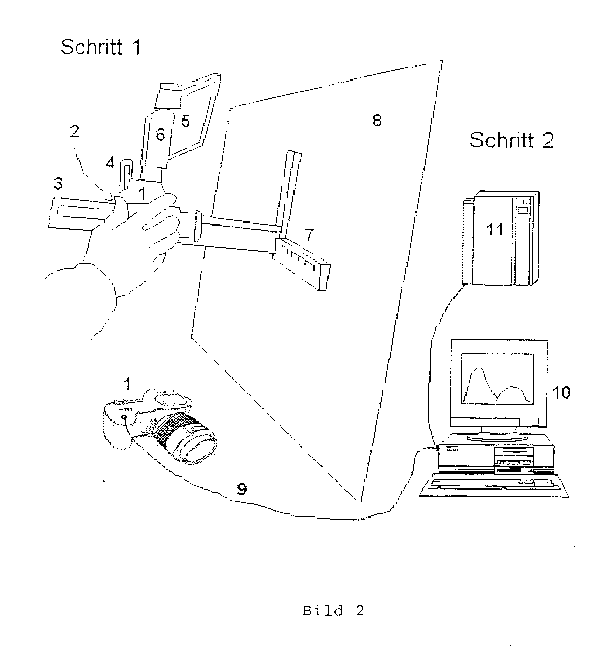

Bild 1 zeigt den Aufbau der erfindungsgemäßen Oberflächenprüfeinrichtung im Gebrauch. Die Kamera 1 ist mit einer Halterung 2 auf einem System von horizontalen 3 und vertikalen 4 Verschiebevorrichtungen befestigt. Ein Blitzschuh 6 als Energieversorgung, der die Kamera 1 mit einem Flächenblitz 5 verbindet, sowie der Flächenblitz 5 gewährleisten die gewünschte standardisierbare Beleuchtung der Oberfläche 8. Eine Skalierung 7 auf einem in definierten Abstand befindlichen Element dient als Maßstab für die spätere Auswertung (siehe Bild 2).

Es dürfte einleuchten, dass sämtliche für die erfindungsgemäße Oberflächenprüfeinrichtung vorgesehenen Teile in einen kleinen, möglichst stoßfesten Koffer (nicht gezeigt) passen und so einfach und schnell transportabel sind. Ferner kann die erfindungsgemäße Vorrichtung einfach gehandhabt werden, da ihr Auf- bzw. Zusammenbau einfach zu bewerkstelligen ist. Insofern kann die Stahloberfläche 8 vor Ort untersucht werden, da diese sich häufig an stationären Objekten befindet, bzw. Brücken, aufgedockte Schiffe bzw. sonstige Stahlkonstruktionen. Ebenso ist es selbstverständlich, dass sich die erfindungsgemäße Vorrichtung und Verfahren auch an beweglichen Objekten sowie bei anderen Materialien als Stahl einsetzen läßt. Die gewünschte Mobilität kann also erfindungsgemäß erzielt werden.

Bild 2 zeigt den verfahrensgemäßen Ablauf mit Auswertung der aufgenommenen Digitalfotos und anschließender Beurteilung der Oberflächen in einer Datenverarbeitungsanlage. Die Oberfläche 8 wird zunächst von der Kamera 1, die mittels einer Halterung 2 befestigt ist, im Schritt 1 mittels einer vertikalen 3 sowie einer horizontalen 4 Verschiebungseinrichtung in die vorgeschriebene Position gebracht wird, aufgenommen. Diese geometrisch definierte Standardeinstellung wird ergänzt durch eine Standardbelichtung, die mittels eines Blitzschuhs 6 sowie eines Flächenblitzes 5 realisiert wird. Das Bild der Oberfläche 8 wird - einschließlich des integrierten Maßstabs 7 - digitalisiert und mittels eines Kabels 9 in einen Computer 10 übertragen. Eine im Computer installierte Software vergleicht vorgegebene Merkmale des Bildes der Oberfläche 8 mit den Merkmalen von in einem Speicher 11 abgelegten Standardoberflächen und ordnet die aufgenommene Oberfläche 8 einer bestimmten Standardoberfläche zu.

Nach dem Aufnehmen der Digitalfotos vor Ort im Schritt 1 wird die Kamera zusammen mit den üblichen Teilen wieder eingepackt und an einem gewünschten, entfernt liegenden Ort über ein Kabel 9 oder dql. mit einer elektronischen Datenverarbeitungsanlage (10,11) für die Auswertung verbunden. Es dürfte jedoch ebenfalls für den Fachmann einleuchten, dass er diese Auswertung ggf. auch vor Ort durchführen kann, sofern statt einer größeren Datenverarbeitungsanlage lediglich ein gut ausgerüstetes, tragbares Notebook (nicht gezeigt) verwendet wird, das über eine geeignete Software und Speicher verfügt.

Sämtliche Teile der erfindungsgemäßen Vorrichtung, wie sie hier im Bild 2 gezeigt werden, sind handelsüblich und müssen lediglich in der gewünschten Anordnung zusammengestellt und zusammengebaut werden. Bei der erwähnten installierten Software handelt es sich beispielsweise um das Programm Image-Pro Plus der Firma Media Cybernetics, so dass auch ohne weiteres auf einem Notebook installiert werden kann, da es lediglich 82 MB umfaßt.

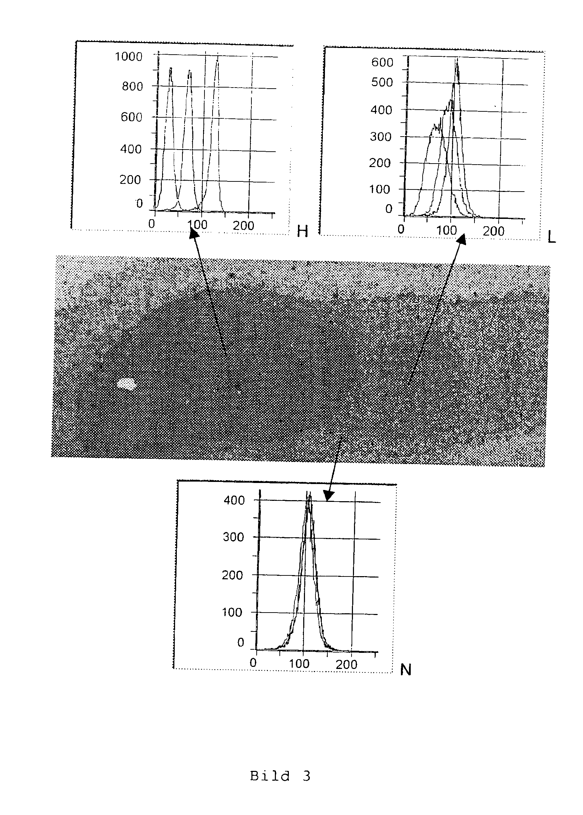

Auf Bild 3 sind die Intensitätsverteilungen einer teilweise angerosteten Stahloberfläche (8), die aus den digitalisierten Daten der entsprechenden Photographie gewonnen wurde, als Histogramme dargestellt. Auf den Abszissen sind die entsprechenden Farbintensitäten dargestellt (von 0 bis 250), während auf den Ordinaten die Anzahl der Messpunkte aufgetragen sind. Drei verschiedene Rostgrade, und zwar N (kein Rost), L (leichter Rost) und H (schwerer Rost) können auf Grund der jeweils typischen Histogramme eindeutig beurteilt werden. Ein Vergleich eines individuellen Histogramms mit bereits vorhandenen Kurven standardisierter Oberflächen gestattet die Einordnung der photographierten Fläche in einen Standard-Rostgrad.

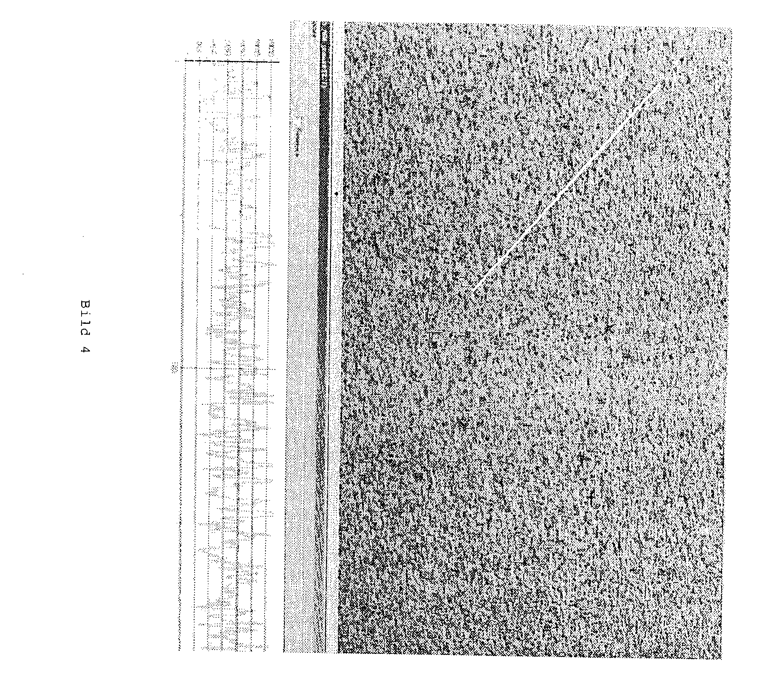

Bild 4 verdeutlicht die Beurteilung der Oberflächenstruktur als typischen Zustand einer Oberfläche. Auf der digitalisierten Photographie im oberen Bildteil wird eine (im Bild weiße) Messlinie angelegt. Entlang dieser Linie werden die Hell-Dunkel-Unterschiede des Untergrundes gemessen und mit Hilfe des Maßstabs kalibriert. Hierbei gelten helle Teilbereiche als tiefer liegende, und dunkle Teilbereiche als höher liegende Regionen. Im Ergebnis entsteht die im unteren Bildteil aufgetragene Profildarstellung, aus der sich zum Beispiel ein mittlerer Rauheitswert errechnen lässt.

## Patentansprüche

1. Optische Oberflächenprüfvorrichtung, mit einem eine Energieversorgung (6) aufweisenden Beleuchtungskörper (5) zum Beleuchten der Oberfläche eines Prüflings mit einer standardisierbaren diffusen Lichtausstrahlung und mit einer Kamera (1), die auf oder in einer an einem Rahmen befestigten Halterung (2) befestigt ist, wobei der Rahmen auf der Oberfläche des Prüflings aufsetzbar ist und zusätzlich eine auf die Oberfläche des Prüflings aufsetzbare und als Maßstab für eine spätere Auswertung dienende Skalierung (7), eine horizontale Verschiebeeinrichtung (3) und eine vertikale Verschiebeinrichtung (4) aufweist und diese Verschiebeeinrichtungen (3,4) geeignet sind, die Kamera (1) in eine vorgeschriebene Position zu bringen, und wobei die Kamera (1) zum digitalen Erfassen der Oberfläche des Prüflings einschließlich der integrierten Skalierung (7) eingerichtet ist.

2. Optische Oberflächenprüfvorrichtung nach Anspruch 1, wobei mindestens zwei definierbare Abstände der Kamera (1) vorgesehen sind.

3. Optische Oberflächenprüfvorrichtung nach Anspruch 1 und 2, wobei der Beleuchtungskörper ein Flächenblitz ist.

4. Optische Oberflächenprüfvorrichtung nach Anspruch 1 bis 3, wobei die Energieversorgung durch einen Blitzlichtschuh mit einstellbarer Blitzenergie gebildet wird.

5. Optische Oberflächenprüfvorrichtung nach Anspruch 1 bis 4, wobei die Skalierung in cm und/oder inch vorliegt.

6. Optische Oberflächenprüfvorrichtung nach Anspruch 1 bis 5, wobei Blende, Belichtungszeit und Vergrößerung der Kamera standardisiert sind.

7. Optische Oberflächenprüfvorrichtung nach Anspruch 1 bis 6, wobei die Kamera (1) mit einer Datenverarbeitungsanlage (10,11) durch IR, Funk oder ein Kabel (9) verbunden ist.

## Claims

1. An optical surface inspection device, having an illumination body (5) presenting an energy supply (6) for illuminating the surface of a specimen with a diffuse light radiation which can be standardised and having a camera (1), which is fixed to or in a bracket (2) fastened to a frame, whereas the frame can be mounted on the surface of the specimen and includes additionally a scaling (7) which can be mounted on the surface of the specimen and which acts as a benchmark for later interpretation, a horizontal displacement device (3) and a vertical displacement device (4) and these displacement devices (3,4) are designed to bring the camera (1) into a prescribed position and whereas the camera (1) is arranged for digital detection of the surface of the specimen including the integrated scaling (7).

2. An optical surface inspection device according to claim 1, whereas at least two definable distances of the camera (1) are provided.

3. An optical surface inspection device according to claim 1 and 2, whereas the illumination body is a sheet lightning.

4. An optical surface inspection device according to claim 1 to 3, whereas the energy supply is formed by a flashlight shoe with an adjustable flash energy.

5. An optical surface inspection device according to claim 1 to 4, whereas the scaling is available in cm and/or inches.

6. An optical surface inspection device according to claim 1 to 5, wherein aperture, illumination time and enlargement of the camera are standardised.

7. An optical surface inspection device according to claim 1 to 6, whereas the camera (1) is connected to a data processing unit (10,11) via IR, radio or a cable (9).

## Revendications

1. Dispositif optique d'inspection de surface, comprenant un corps d'éclairage (5) présentant une alimentation en énergie (6) pour éclairer la surface d'un spécimen avec un rayonnement lumineux diffus que l'on peut standardiser et comprenant une caméra (1), qui est fixée à dans un support (2) monté sur un cadre, où le cadre peut être installé à la surface du spécimen et comporte en outre une graduation (7) qui peut être installée à la surface du spécimen et qui fait office de repère en vue d'une interprétation future, un dispositif de déplacement horizontal (3) et un dispositif de déplacement vertical (4) et ces dispositifs de déplacement (3,4) sont conçus pour amener la caméra (1) dans une position prescrite et où la caméra (1) est disposée pour assurer la détection numérique de la surface du spécimen englobant la graduation intégrée (7).

2. Dispositif optique d'inspection de surface selon la revendication 1, où au moins deux distances définissables de la caméra (1) sont prévues.

3. Dispositif optique d'inspection de surface selon la revendication 1 et 2, où le corps d'éclairage est un éclair en nappe.

4. Dispositif optique d'inspection de surface selon la revendication 1 à 3, où l'alimentation en énergie est formée par un sabot de flash avec une énergie de flash réglable.

5. Dispositif optique d'inspection de surface selon la revendication 1 à 4, où la graduation est disponible en cm et/ou en pouces.

6. Dispositif optique d'inspection de surface selon la revendication 1 à 5, où l'ouverture, le temps d'éclairage et l'agrandissement de la caméra sont standardisés.

7. Dispositif optique d'inspection de surface selon la revendication 1 à 6, où la caméra (1) est connectée à une unité de traitement de données (10,11) par IR, radio ou câble (9).
